# EUROPEAN PATENT APPLICATION

(11) **EP 4 610 607 A1**
(43) Date of publication of application: **03.09.2025**
(21) Application number: 23903102.4
(22) Date of filing: 18.10.2023
(51) Int. Cl.: G01J 5/08, G05B 23/02, G05D 1/43, G01J 5/00

(54) **TRAVELLING CARRIAGE, TEMPERATURE MEASURING METHOD, AND COKE OVEN OPERATION METHOD**

(30) Priority: 13.12.2022 JP 2022198915
(71) Applicant: JFE Steel Corporation, Tokyo 100-0011 (JP)
(72) Inventor: TAKAKI Yuki, Tokyo 100-0011 (JP); TAKAHASHI Ryo, Tokyo 100-0011 (JP)
(74) Representative: Hoffmann Eitle
(86) International application number: PCT/JP2023/037772
(87) International publication number: WO 2024/127803

(57) **Abstract**

A travelling carriage 1 that travels on a travel surface in a travel region by means of a drive device 10. The travelling carriage 1 includes: a temperature measuring device 4 that measures temperature of a measurement subject; an image acquisition device 2 that acquires image information on the travel surface; and an arithmetic device 3 that detects the measurement subject from the image information. The arithmetic device 3 adjusts a position or an orientation of the temperature measuring device 4 based on a position of the measurement subject detected from the image information.

## Description

### TECHNICAL FIELD

The present disclosure relates to a travelling carriage and a temperature measuring method for measuring temperature of a measurement subject, in particular the temperature in a coke oven, and a coke oven operation method.

### BACKGROUND

A coke oven has a structure of carbonization chambers, where coal is charged and coal powder is dry distilled, alternating with combustion chambers, where gas and the like are burned to maintain high temperature inside the oven. In coke oven operation, temperature management inside the oven is important. Currently, the temperature inside the oven is managed by measuring the oven bottom, located about 10 m below a flue hole at the oven top, using a radiation thermometer. Temperature measurement from the flue hole is carried out in a hot and dusty environment at the coke oven top, which may cause dust inhalation and heat stroke when carried out by a person.

As a device that automatically carries out temperature measurement, an example is a robot that carries out autonomous travel using a LiDAR sensor, as described in Patent Literature (PTL) 1.

### CITATION LIST

### Patent Literature

PTL 1: JP 2020-086678 A

### SUMMARY

### (Technical Problem)

The autonomous mobile robot described in PTL 1 moves to a temperature measurement location specified in advance by coordinates by autonomous travel using a LiDAR sensor, in order to measure temperature. However, when measuring temperature by aiming at a specific spot where dust accumulates on the travel surface and the stop position is easily misaligned due to slippage when stopping, such as at the top of a coke oven, the precision of the stop position with respect to the temperature measurement location becomes low. Temperature measurement precision is decreased due to the low precision of the position of the temperature measurement location. The low temperature measurement precision decreases the precision of coke oven operation management.

In view of the above, it would be helpful to provide a travelling carriage and a temperature measuring method that can measure the temperature of a specific location in an environment where the stop position is easily misaligned, and a coke oven operation method that can improve the precision of coke oven operation management based on a measurement result of the temperature of the specific location.

### (Solution to Problem)

According to an embodiment of the present disclosure, (1) a travelling carriage is configured to travel on a travel surface in a travel region by means of a drive device. The travelling carriage comprises: a temperature measuring device configured to measure temperature of a measurement subject; an image acquisition device configured to acquire image information on the travel surface; and an arithmetic device configured to detect the measurement subject from the image information. The arithmetic device adjusts the position or orientation of the temperature measuring device based on a position of the measurement subject detected from the image information.

(2) In the travelling carriage according to (1), above, the arithmetic device may be configured to detect the measurement subject from the image information by image recognition.

(3) The travelling carriage according to (1) or (2), above, may further comprise an actuator configured to adjust at least one of a position or an angle of the temperature measuring device.

(4) In the travelling carriage according to (3), above, the arithmetic device may be configured to adjust a horizontal position or a vertical angle of the temperature measuring device by means of the actuator before measuring of the temperature by the temperature measuring device.

(5) The travelling carriage according to (4), above, may further comprise a distance measuring device configured to measure distance between the temperature measuring device and the measurement subject. In the travelling carriage according to (4), above, the arithmetic device may be configured to change the vertical angle of the temperature measuring device by means of the actuator while the temperature is being measured by the temperature measuring device, and to filter temperature measurement results measured by the temperature measuring device using measurement results of the distance measuring device.

(6) In the travelling carriage according to any one of (1) to (5), above, the arithmetic device may be configured to determine whether a measurement result of the temperature measuring device is in a normal range and to report a determination result.

(7) The travelling carriage according to any one of (1) to (6), above, may further comprise: a movement amount detecting device configured to detect a movement amount of the travelling carriage by acquiring an operation amount of the drive device; a range measuring device configured to acquire obstacle information around the travelling carriage; and a storage device configured to store obstacle position information on the travel region. The arithmetic device may be configured to calculate a position of the travelling carriage by inputting a detection result of the movement amount of the travelling carriage, the obstacle information, and the obstacle position information into a particle filter based on a SLAM algorithm, and to cause the travelling carriage to travel autonomously.

(8) In the travelling carriage according to (7), above, the storage device may be configured to store waypoint information that specifies at least one position of the measurement subject as a waypoint. The arithmetic device may be configured to cause the travelling carriage to travel via the waypoint based on the waypoint information and to measure the temperature of the measurement subject at the waypoint by means of the temperature measuring device.

(9) In the travelling carriage according to any one of (1) to (8), above, the measurement subject may be a hole in the travel surface. The temperature measuring device may be configured to measure the temperature in the hole.

(10) In the travelling carriage according to (9), above, the hole may be a flue hole formed at the top of a coke oven. The temperature measuring device may be configured to measure the temperature in the coke oven via the flue hole.

According to an embodiment of the present disclosure, (11) a temperature measuring method comprises: a travel process of causing the travelling carriage according to any one of (1) to (10), above, to travel in a travel region where a measurement subject exists; an image acquisition process of acquiring image information on a travel surface by the image acquisition device installed on the travelling carriage; a measurement subject detection process of detecting the measurement subject from the image information; an adjustment process of adjusting a position or an orientation of the temperature measuring device based on a position of the measurement subject; and a measurement process of measuring temperature of the measurement subject by means of the temperature measuring device.

According to an embodiment of the present disclosure, (12) a coke oven operation method comprises: a process of acquiring oven temperature of a coke oven measured using the travelling carriage described according to (10), above; and a process of managing operating conditions of the coke oven based on the oven temperature of the coke oven.

### (Advantageous Effect)

According to the present disclosure, a travelling carriage and a temperature measuring method are provided that are capable of measuring the temperature of a specific location in an environment where the stop position is easily misaligned, and a coke oven operation method is provided that is capable of improving the precision of coke oven operation management based on a measurement result of the temperature of the specific location.

### BRIEF DESCRIPTION OF THE DRAWINGS

In the accompanying drawings:
FIG. 1 is a schematic diagram illustrating a configuration example of a travelling carriage according to the present disclosure;
FIG. 2 is a block diagram illustrating a configuration example of a travelling carriage according to the present disclosure;
FIG. 3 is a diagram illustrating an example of a list including waypoint information;
FIG. 4 is a diagram illustrating an example of a positional relationship between a travelling carriage and a flue hole that is a measurement subject;
FIG. 5 is a flowchart illustrating example procedures of a temperature measuring method according to the present disclosure;
FIG. 6 is a diagram illustrating a positional relationship between a temperature measuring device and a flue hole according to an Example;
FIG. 7 is a diagram illustrating a travel path in a travel region of a travelling carriage according to an Example;
FIG. 8 is a graph illustrating measurement results at a first measurement position;
FIG. 9 is a graph illustrating measurement results at a second measurement position; and
FIG. 10 is a graph illustrating measurement results at a third measurement position.

### DETAILED DESCRIPTION

Embodiments of the travelling carriage, the temperature measuring method, and the coke oven operation method according to the present disclosure are described below, with reference to the drawings. Each drawing is schematic and may differ from actual implementation. Further, the following embodiments are examples of devices or methods for embodying the technical concept of the present disclosure, and are not limiting. That is, various changes may be made to the technical concept of the present disclosure within the technical scope described in the claims.

### (Embodiments)

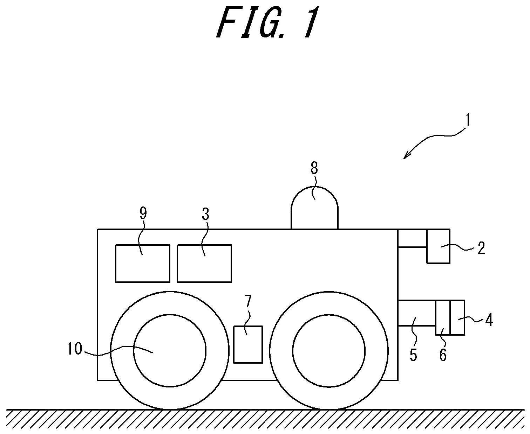

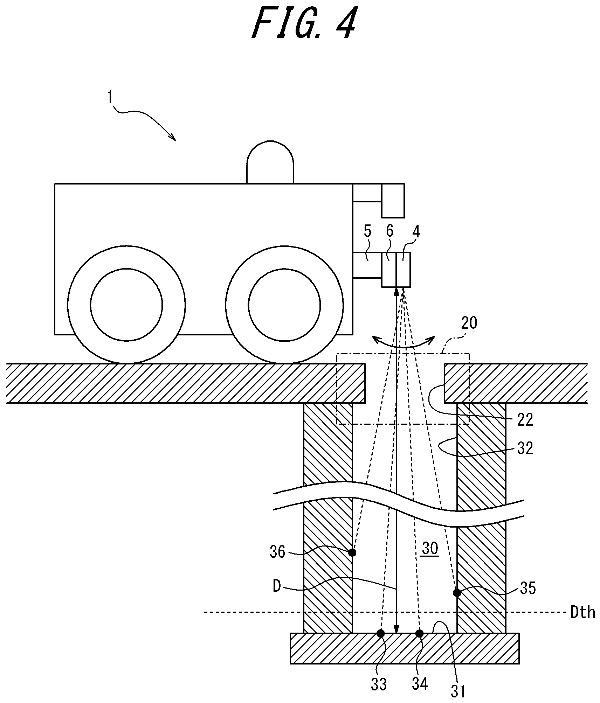

According to the embodiment described below, a travelling carriage 1 (see FIG. 1) measures the internal temperature of a flue hole 20 (see FIG. 4) formed at the top of a coke oven 30 (see FIG. 4), the flue hole 20 being a measurement subject, while travelling with the top of the coke oven 30 as a travel surface. Specifically, the travelling carriage 1 measures the temperature of a bottom 31 (see FIG. 4) of a combustion chamber of the coke oven 30, which is about 400 mm wide and located about 10 m below the flue hole 20. The following describes examples of configuration and operation of the travelling carriage 1 according to the present embodiment.

### <Configuration example of travelling carriage 1>

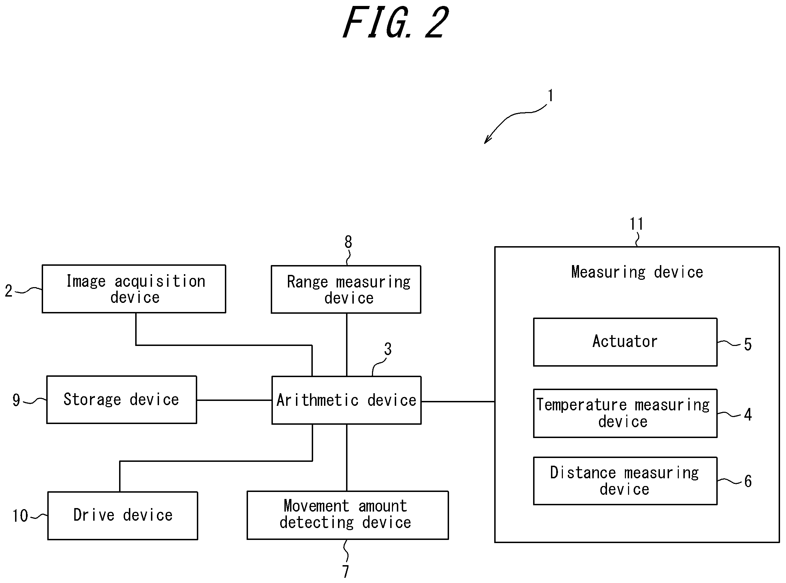

As illustrated in FIG. 1 and FIG. 2, the travelling carriage 1 according to an embodiment of the present disclosure includes a drive device 10, an image acquisition device 2, an arithmetic device 3, a measuring device 11, a movement amount detecting device 7, a range measuring device 8, and a storage device 9. The travelling carriage 1 may be configured to travel autonomously. When the travelling carriage 1 travels due to control by an external device or by human operation, that is, does not travel autonomously, there is no need to include at least one of the movement amount detecting device 7, the range measuring device 8, or the storage device 9.

### <<Drive device 10 and movement amount detecting device 7>>

The drive device 10 may include wheels, caterpillar tracks, or the like that come into contact with the travel surface when the travelling carriage 1 travels over the travel surface. The drive device 10 may be powered by an engine, motor, or the like that drives the wheels, caterpillar tracks, or the like. The movement amount detecting device 7 may be configured to include, for example, an encoder or the like. The movement amount detecting device 7 may detect an operation amount of the drive device 10, and may detect a movement amount of the travelling carriage 1.

### <<Image acquisition device 2>>

The image acquisition device 2 may include a camera or the like to capture images of the surroundings of the travelling carriage 1. The camera may be configured to capture images of the region over which the travelling carriage 1 travels. The camera may be configured to capture images of the travel surface of the travelling carriage 1. The image acquisition device 2 may be installed at the front of the travelling carriage 1, that is, on a travel direction side of the travelling carriage 1.

### <<Measuring device 11>>

The measuring device 11 includes a temperature measuring device 4, a distance measuring device 6, and an actuator 5. The measuring device 11 does not have to include the distance measuring device 6 or the actuator 5.

The temperature measuring device 4 measures the temperature of a measurement subject. According to the present embodiment, the temperature measuring device 4 measures the temperature inside the flue hole 20. The temperature measuring device 4 may be configured to include, for example, an infrared radiation thermometer. When the temperature measuring device 4 is an infrared radiation thermometer, the temperature measuring device 4 measures the temperature of a defined range of the measurement subject by receiving infrared radiation emitted from the defined range of the measurement subject. The defined range is also referred to as a measurement spot. The measurement spot, or a point included in the measurement spot, may also be referred to as a temperature measurement point. That is, the temperature measuring device 4 measures the temperature of a temperature measurement point in the measurement subject. The temperature measuring device 4 is not limited to a radiation thermometer and may be configured to include various other temperature measurement means.

The distance measuring device 6 measures distance from the temperature measuring device 4 to the measurement subject. According to the present embodiment, the distance measuring device 6 measures the distance from the temperature measuring device 4 to the temperature measuring point inside the flue hole 20. The distance measuring device 6 may be configured to include, for example, a laser rangefinder. The distance measuring device 6 is not limited to a laser rangefinder and may be configured to include various other distance measurement means, such as ultrasonic or optical distance measurement means.

The temperature measuring device 4 and the distance measuring device 6 may be installed on the travelling carriage 1 via the actuator 5. The actuator 5 may be configured to include a motor, a piezoelectric device, or the like to move the temperature measuring device 4 and the distance measuring device 6. The actuator 5 may be configured to include a linear slider for linear movement of the temperature measuring device 4 and the distance measuring device 6.

The actuator 5 is able to adjust a position or an angle of the temperature measuring device 4 and the distance measuring device 6 relative to the travelling carriage 1 by moving the temperature measuring device 4 and the distance measuring device 6. The position of the temperature measuring device 4 and the distance measuring device 6 relative to the travelling carriage 1 may be adjusted in the horizontal plane following the travel surface. The angle of the temperature measuring device 4 and the distance measuring device 6 relative to the travelling carriage 1 may be adjusted with respect to the vertical direction. That is, the horizontal position and the vertical angle of the temperature measuring device 4 and the distance measuring device 6 with respect to the travelling carriage 1 may be adjusted.

By adjusting the relative position or the angle of the temperature measuring device 4, the position of the temperature measurement point is adjusted. The position or the angle of the distance measuring device 6 is adjusted so that the distance from the temperature measuring device 4 to the temperature measuring point can be measured. When both the temperature measuring device 4 and the distance measuring device 6 are attached to the actuator 5, the position or the angle of the distance measuring device 6 is adjusted simultaneously with the position or the angle of the temperature measuring device 4.

### <<Arithmetic device 3>>

The arithmetic device 3 is connected to each component of the travelling carriage 1 as illustrated in FIG. 2, and is configured to acquire information or data from each component of the travelling carriage 1 and to control each component of the travelling carriage 1. The arithmetic device 3 may calculate the position of the travelling carriage 1 or acquire the position of the travelling carriage 1. The arithmetic device 3 may control the drive device 10 to cause the travelling carriage 1 to travel, based on the position of the travelling carriage 1. The arithmetic device 3 may calculate the travel path of the travelling carriage 1. The arithmetic device 3 may detect the position of the flue hole 20, which is the temperature measurement subject, and control the actuator 5 to adjust the position and the angle of the temperature measuring device 4 and the distance measuring device 6. The arithmetic device 3 may acquire the temperature measurement results of the measurement subject from the temperature measuring device 4.

The arithmetic device 3 may be configured to include at least one processor, such as a central processing unit (CPU) or a graphics processing unit (GPU). The arithmetic device 3 may be configured to include a single processor or a plurality of processors. A processor or processors of the arithmetic device 3 may realize functions of the travelling carriage 1 by reading and executing a program stored in a storage, described below.

The arithmetic device 3 may include the storage. The storage stores various types of information or data. The storage may store, for example, a program to be executed in the arithmetic device 3, data used in processing executed in the arithmetic device 3, a result of processing, and the like. Further, the storage may function as working memory of the arithmetic device 3. The storage may be configured as semiconductor memory, for example, but is not limited to this example. For example, the storage may be configured as internal memory of a processor used as the arithmetic device 3 or as a hard disk drive (HDD) accessible from the arithmetic device 3. The storage may be configured as a non-transitory readable medium. The storage may be configured as an integral part of the arithmetic device 3 or as a separate unit from the arithmetic device 3. When the travelling carriage 1 includes the storage device 9, the arithmetic device 3 may have the storage function as the storage device 9. The storage of the arithmetic device 3 and the storage device 9 may be configured as a single unit, or each may be configured as a separate unit.

The arithmetic device 3 may include a communicator. The communicator may be configured to include a communication interface for communicating with other devices by wired or wireless means. The communication interface may be configured to communicate with other devices via a network. The communicator may be configured to include input/output ports that input and output data to and from other devices. The communicator sends and receives required data and signals to and from a process computer or high-level system. The communicator may communicate based on a wired communication standard and may communicate based on a wireless communication standard. Example wireless communication standards may include cellular phone communication standards such as 3G, 4G, 5G, and the like. Further, example wireless communication standards may include IEEE 802.11 and Bluetooth^{®} (Bluetooth is a registered trademark in Japan, other countries, or both). The communicator may support one or more of such communication standards. The communicator is not limited to these examples and may communicate with other devices and input and output data based on various standards. The communicator may be configured as an integral part of the arithmetic device 3 or as a separate unit from the arithmetic device 3.

The arithmetic device 3 may be configured to include an input device that accepts input such as information or data from a person. Example input devices may include a touch panel or a touch sensor, or a pointing device such as a mouse. The input device may be configured to include physical keys. The input device may be configured to include an audio input device such as a microphone. The arithmetic device 3 may be configured to connect to an external input device. The arithmetic device 3 may be configured to acquire information or data input to an external input device from the external input device.

### <<Range measuring device 8 and storage device 9>>

The range measuring device 8 may be configured to include, for example, a laser range finder, an infrared sensor, an ultrasonic sensor, a radio wave radar sensor, a depth camera, a stereo camera, or the like. The range measuring device 8 may be configured to acquire obstacle information around the travelling carriage 1, that is, two-dimensional or three-dimensional shape information on surrounding structures, while the travelling carriage 1 is travelling.

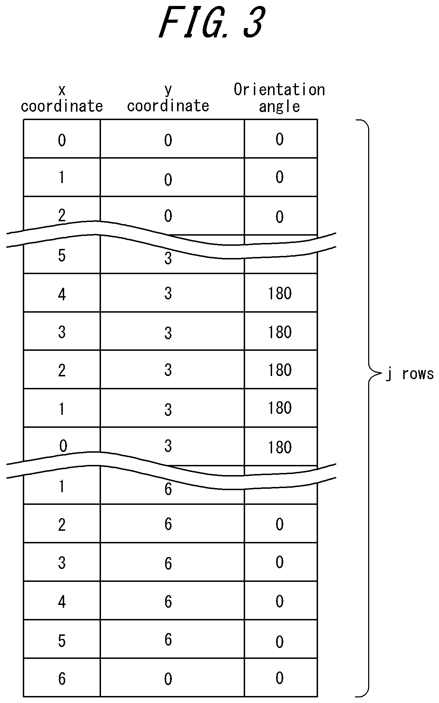

The storage device 9 may be configured to store obstacle position information or waypoint information on a region in the travel region of the travelling carriage 1, or temperature measurement results or the like according to the temperature measuring device 4. The waypoint information represents a point through which the travelling carriage 1 travels autonomously within the travel region of the travelling carriage 1. The waypoint information may be generated as a list of information on position coordinates of each waypoint and an orientation angle θ of the travelling carriage 1 at each waypoint, arranged in the order in which the travelling carriage 1 travels, as illustrated in FIG. 3. The position coordinates of each waypoint may be expressed as an x-coordinate and a y-coordinate on the travel surface of the travelling carriage 1. The orientation angle θ of the travelling carriage 1 at each waypoint may be expressed as the angle of the travelling direction of the carriage 1 relative to the positive direction of the x-axis. In the example in FIG. 3, the waypoint information includes information on j waypoints that the travelling carriage 1 travels through.

When the travelling carriage 1 travels autonomously, the arithmetic device 3 causes repetition of autonomous travel of the travelling carriage 1 after reaching, for example, the i-th waypoint, with the i+1-th waypoint as the next movement target. The arithmetic device 3 may cause autonomous travel of the travelling carriage 1 until the travelling carriage 1 reaches the last j-th waypoint. After the travelling carriage 1 reaches the last j-th waypoint and measures the temperature, the arithmetic device 3 may cause the travelling carriage 1 to travel autonomously back to an initial position.

When the travelling carriage 1 does not travel autonomously, an external device controlling the travelling carriage 1 or a person operating the travelling carriage 1 may cause the travelling carriage 1 to travel, based on the waypoint information.

By having the storage device 9 store the waypoint information in advance, then even when the flue hole 20 as the measurement subject is present in large numbers, the travelling carriage 1 can autonomously travel to each measurement subject to measure temperature.

The arithmetic device 3 may calculate the position of the travelling carriage 1 based on the obstacle information around the travelling carriage 1 acquired from the range measuring device 8 and the obstacle position information stored in the storage device 9. The arithmetic device 3 may calculate the position of the travelling carriage 1 based on a simultaneous localization and mapping (SLAM) algorithm using a Kalman filter, an extended Kalman filter, a particle filter, a Bayes filter, or the like. The arithmetic device 3 may increase the precision of calculating the position of the travelling carriage 1 by combining an output result of the SLAM algorithm with information such as a position of the travelling carriage 1 estimated by odometry based on a result of the movement amount detecting device 7, a position result of the travelling carriage 1 according to a satellite positioning system such as a global positioning system (GPS), or a position of the travelling carriage 1 calculated based on the output of an inertial measurement unit (IMU) including an accelerometer, and the like.

### <Operation example of travelling carriage 1>

The travelling carriage 1 according to the present embodiment moves to the flue hole 20, which is the measurement subject present on the travel surface, and measures the temperature inside the flue hole 20 by the temperature measuring device 4. The following is a description of an operation example of the travelling carriage 1 when travelling autonomously on the travel surface.

### <<Movement to measurement subject>>

The arithmetic device 3 sets the measurement subject that the travelling carriage 1 autonomously travels to. According to the present embodiment, the arithmetic device 3 is assumed to cause autonomous travel of the travelling carriage 1 to measure the temperature of at least one flue hole 20 as a measurement subject selected from a plurality of flue holes 20 that are present on the travel surface or at an oven top.

The arithmetic device 3 sets the position of at least one measurement subject. The position of the measurement subject is also referred to as a measurement position. That is, the arithmetic device 3 sets at least one measurement position. The arithmetic device 3 stores information on the flue hole 20 that is the measurement subject in the storage device 9 as waypoint information. For the flue hole 20 that is the measurement subject, the arithmetic device 3 may store in the storage device 9 a list of information on the flue hole 20 selected in advance by a person from the plurality of flue holes 20 as waypoint information. For example, the arithmetic device 3 may accept input from a person to select the flue hole 20 to be the measurement subject. The arithmetic device 3 may accept input, from a person, of information about the flue hole 20 to be the measurement subject. The arithmetic device 3 may store information on the flue hole 20 to be the measurement subject in the storage device 9 as waypoint information, based input from a person.

The arithmetic device 3 causes the travelling carriage 1 to autonomously travel in the travel region based on the waypoint information. The arithmetic device 3 calculates the position of the travelling carriage 1 by inputting the movement amount of the travelling carriage 1 detected by the movement amount detecting device 7, the obstacle information acquired by the range measuring device 8, and the obstacle position information recorded in the storage device 9 into a particle filter based on a SLAM algorithm. The arithmetic device 3 may calculate the position of the travelling carriage 1 by comparing the measurement results of surrounding structure shape according to the range measuring device 8 with surrounding structure shape stored in advance in the storage device 9. The arithmetic device 3 causes the travelling carriage 1 to autonomously travel to the waypoint based on the calculated result of position of the travelling carriage 1.

### <<Position adjustment of temperature measuring device 4 relative to measurement subject>>

When the travelling carriage 1 arrives at the waypoint, the arithmetic device 3 acquires image information on the travel surface around the travelling carriage 1 via the image acquisition device 2. The arithmetic device 3 detects the position of the flue hole 20 that is the measurement subject by executing image recognition on the image information acquired.

The arithmetic device 3 calculates the position at which the travelling carriage 1 arrived and the orientation of the travelling carriage 1 relative to the travel surface. The orientation of the travelling carriage 1 is specified by the angle that the travel direction of the carriage 1 makes with respect to the travel surface, that is, the horizontal plane, and the angle that the travel direction of the travelling carriage 1 makes with respect to the positive direction of the x-axis of the travel surface. The angle that the travel direction of the travelling carriage 1 makes with respect to the travel surface, that is, the horizontal plane, may differ from the angle assumed by the arithmetic device 3 due to unevenness of the travel surface or the like. Further, the position or the orientation of the travelling carriage 1 may differ from the position or the orientation assumed by the arithmetic device 3 due to slipping of the wheels or the like included in the drive device 10 of the travelling carriage 1.

The arithmetic device 3 calculates the position and the orientation of the temperature measuring device 4, which is determined by the position and the orientation of the travelling carriage 1. The position of the temperature measuring device 4 is expressed as the x-coordinate and the y-coordinate of the position of a projection of the temperature measuring device 4 onto the travel surface. The orientation of the temperature measuring device 4 is expressed as the angle that the direction from the temperature measuring device 4 to the temperature measurement point makes with respect to the vertical direction.

The arithmetic device 3 may determine whether the position of the temperature measuring device 4 when projected onto the travel surface is located within a range of the flue hole 20 that is the measurement subject. When the position of the temperature measuring device 4 projected onto the travel surface is outside the range of the flue hole 20, the arithmetic device 3 may control the actuator 5 so that the position of the temperature measuring device 4 projected onto the travel surface is within the range of the flue hole 20. The arithmetic device 3 may control the drive device 10 to cause the travelling carriage 1 to move so that the position of the temperature measuring device 4 projected onto the travel surface is within the range of the flue hole 20.

Even when the temperature measuring device 4 is positioned within the range of the flue hole 20, the temperature measurement point changes depending on the orientation of the temperature measuring device 4 (the direction in which infrared light is received), as illustrated in FIG. 4. In FIG. 4, the flue hole 20 is specified as an opening in the travel surface of the travelling carriage 1 that is defined by a side surface 22. Here, the coke oven 30 includes the flue hole 20 and a combustion chamber below the flue hole 20. The combustion chamber of the coke oven 30 is configured as a space defined by an oven bottom 31 and an oven side 32. The flue hole 20 is above the combustion chamber of the coke oven 30. In other words, the combustion chamber of the coke oven 30 is below the flue hole 20. Depending on the orientation of the temperature measuring device 4, the temperature measuring point may be located at point 33 or point 34 on the oven bottom 31, or at point 35 or point 36 on the oven side 32, which are away from the oven bottom 31.

The arithmetic device 3 calculates the position of the temperature measurement point based on the position and the orientation of the temperature measuring device 4 and the position of the flue hole 20 detected by image recognition. The arithmetic device 3 determines whether the temperature measurement point is at the oven bottom 31 of the coke oven 30 inside the flue hole 20 that is the measurement subject. When the temperature measurement point is away from the oven bottom 31, the arithmetic device 3 may change the orientation of the temperature measuring device 4 so that the temperature measurement point is on the oven bottom 31 by controlling the actuator 5.

The arithmetic device 3 may measure the distance from the temperature measuring device 4 to the temperature measuring point by means of the distance measuring device 6. In FIG. 4, the distance from the temperature measuring device 4 to the temperature measurement point is represented by D. The arithmetic device 3 may determine that the temperature measurement point is at the oven bottom 31 when the distance (D) from the temperature measuring device 4 to the temperature measurement point is greater than a distance threshold (Dth). The arithmetic device 3 may set the distance threshold as appropriate, based on the depth from the travel surface to the oven bottom 31.

### <<Temperature measurement and determination>>

When the arithmetic device 3 determines that the temperature measurement point is located at the oven bottom 31, the temperature of the temperature measurement point is measured by the temperature measuring device 4.

The arithmetic device 3 may measure the distance and the temperature of a plurality of temperature measurement points while controlling the actuator 5 to change the angle of the temperature measuring device 4 and the distance measuring device 6 with respect to the vertical direction.

The arithmetic device 3 processes the measurement results. For example, the arithmetic device 3 may filter the measurement results of the temperature measuring device 4 using the measurement results of the distance measuring device 6. The arithmetic device 3 may adopt a temperature measurement result corresponding to a distance greater than the distance threshold as the temperature measurement result of the oven bottom 31. The arithmetic device 3 may adopt a result of temperature measurement for which the temperature measurement point is confirmed in advance to be at the oven bottom 31 as the temperature measurement result of the oven bottom 31. The arithmetic device 3 may store the temperature measurement result of the oven bottom 31 in the storage device 9. The arithmetic device 3 may output the temperature measurement result of the oven bottom 31 to an external device. By adopting only a temperature measurement result when the distance from the temperature measuring device 4 to the temperature measurement point exceeds the distance threshold, the arithmetic device 3 can eliminate the temperature measurement results for points away from the oven bottom 31 and manage only the temperature measurement results for points on the oven bottom 31. As a result, the measurement precision of the temperature of the coke oven 30 is improved. Points away from the oven bottom 31 may include, for example, points on the oven side 32 and the like.

The arithmetic device 3 determines whether the temperature measurement result of the oven bottom 31 is in a normal range. An upper limit or a lower limit of the normal range of the temperature of the oven bottom 31 is set according to the operating conditions of the coke oven 30. When the temperature measurement result of the oven bottom 31 is outside the normal range, the arithmetic device 3 may determine that the conditions of the coke oven 30 are abnormal and externally report the determination result by, for example, issuing an alarm. When the temperature measurement result of the oven bottom 31 is in the normal range, the arithmetic device 3 determines that the conditions of the coke oven 30 inside the flue hole 20 at the waypoint where the travelling carriage 1 is located are normal. When a subsequent waypoint remains in the waypoint information, the arithmetic device 3 causes the travelling carriage 1 to travel to the next waypoint and repeats the temperature measurement and determination described above at the next waypoint. Upon completion of travel to all the waypoints included in the waypoint information, the arithmetic device 3 may stop the travel of the travelling carriage 1, or may cause the travelling carriage 1 to travel to an initial position.

### <<Example flowchart>>

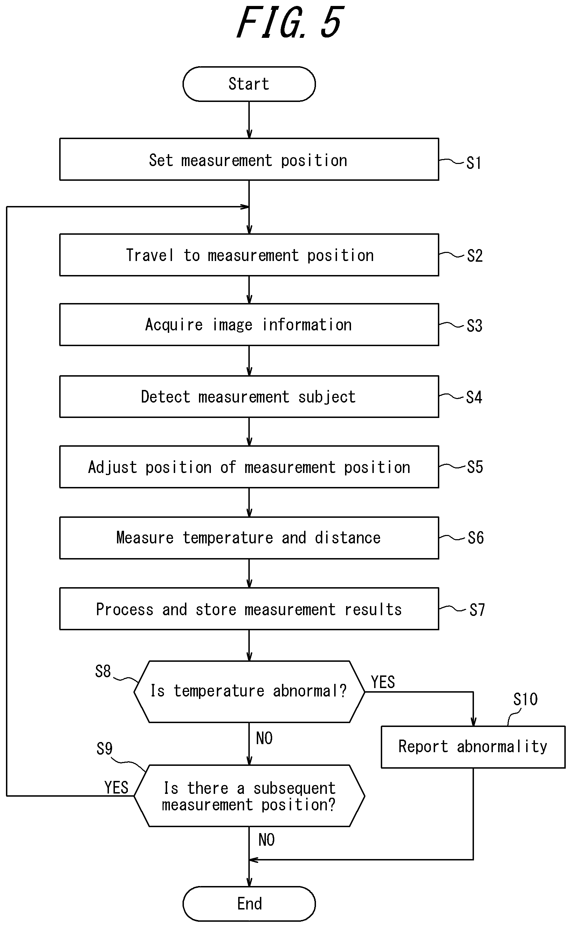

The arithmetic device 3 may carry out a temperature measuring method including the flowchart procedures illustrated in FIG. 5. The temperature measuring method may be realized as a temperature measurement program to be executed by a processor included in the arithmetic device 3. The temperature measurement program may be stored on a non-transitory computer-readable storage medium.

The arithmetic device 3 sets the measurement position (step S1). It is assumed that in the procedure of step S1, the arithmetic device 3 stores in advance in the storage device 9 information on at least one flue hole 20 as a measurement subject as a list of waypoint information, based on information input by a person.

The arithmetic device 3 causes the travelling carriage 1 to travel to the i-th measurement position in the list of waypoint information (step S2). When the travelling carriage 1 arrives at the i-th measurement position, the arithmetic device 3 acquires image information on the travel surface around the travelling carriage 1 via the image acquisition device 2 (step S3). The arithmetic device 3 detects the flue hole 20 that is the measurement subject from the image information by image recognition (step S4).

The arithmetic device 3 adjusts the position of the temperature measurement point by controlling the actuator 5 at the measurement position based on the position of the flue hole 20 detected in the procedure of step S4 (step S5). The arithmetic device 3 measures the temperature of at least one temperature measurement point and the distance from the temperature measuring device 4 to the temperature measurement point (step S6). The arithmetic device 3 processes the measurement result and records an adopted temperature measurement result in the storage device 9 (step S7). In the procedure from step S5 to S7, the arithmetic device 3 may measure the temperature and the distance at a plurality of temperature measurement points and adopt a result of measuring the temperature at the temperature measurement point where the distance measurement result is greater than the distance threshold value. In the procedure from step S5 to S7, the arithmetic device 3 may adopt a result of measuring the temperature after confirming that the temperature measurement point is located on the oven bottom 31.

The arithmetic device 3 determines whether the temperature measured at the i-th measurement position is abnormal (step S8). Specifically, the arithmetic device 3 may determine that the temperature is abnormal when the adopted temperature measurement result is outside the normal range.

When the temperature measured at the i-th measurement position is not abnormal (step S8: NO), that is, the temperature measured at the i-th measurement position is normal, the arithmetic device 3 determines whether a next i+1-th measurement position exists (step S9). When an i+1-th measurement position exists (step S9: YES), the arithmetic device 3 returns to the procedure of step S2 to cause the travelling carriage 1 to travel to the i+1-th measurement position and repeats the temperature measurement and determination procedures from step S3 to S8. When an i+1-th measurement position does not exist (step S9: NO), the arithmetic device 3 ends execution of the flowchart procedures in FIG. 5.

When the temperature measured at the i-th measurement position is abnormal (step S8: YES), the arithmetic device 3 reports that the temperature is abnormal (step S10). After execution of the procedure in step S10, the arithmetic device 3 ends execution of the procedures of the flowchart of FIG. 5. After execution of the procedure in step S10, the arithmetic device 3 may proceed to step S9 and repeat the operation at the next measurement position.

### <Review>

As described above, in the travelling carriage 1 according to the present embodiment, the image acquisition device 2 acquires image information of the measurement subject when the travelling carriage 1 arrives at the measurement position. The arithmetic device 3 detects the position of the measurement subject based on the image information and adjusts the position or the orientation of the temperature measuring device 4 to measure the temperature of a specific location of the measurement subject by controlling the actuator 5 so that the temperature measurement point enters the specific location of the measurement subject. According to the present embodiment, the specific location of the measurement subject is the oven bottom 31. The arithmetic device 3 detects the position of the measurement subject based on the image information and adjusts the position or the orientation of the temperature measuring device 4, in order that the temperature of a specific location of the measurement subject is measured even when the stop position of the travelling carriage 1 at the measurement position is misaligned or the orientation of the travelling carriage 1 is misaligned due to unevenness such as steps on the travel surface. As a result, temperature measurement precision is improved.

Further, in the travelling carriage 1 according to the present embodiment, the arithmetic device 3 may measure the temperature and the distance of a plurality of temperature measurement points while changing the angle of the temperature measuring device 4 and the distance measuring device 6, and filter the temperature measurement results based on the distance to each temperature measurement point. By measuring a plurality of temperature measurement points and filtering the temperature measurement results, the possibility of obtaining a temperature measurement result for a specific location of the measurement subject is increased even when the precision of determining the temperature measurement point is low. Further, the possibility of obtaining a temperature measurement result at a specific location on the measurement subject is increased even when the shape of the measurement subject side is inclined. According to the present embodiment, the shape of the measurement subject side is the shape of the oven bottom 31 of the coke oven 30. As a result, temperature measurement precision is improved. Further, when only one temperature measurement point is determined, then in order to increase the precision of determining the temperature measurement point, device configuration may become more complex and device cost may increase. By measuring a plurality of temperature measurement points and filtering the temperature measurement results, a temperature measurement result for a specific location of the measurement subject can be easily obtained.

### <Coke oven 30 operation method>

The operating conditions of the coke oven 30 may be managed based on the temperature measurement result in the flue hole 20 measured using the travelling carriage 1 described above. For example, the device managing the operating conditions of the coke oven 30 may acquire a temperature measurement result of the inside of the flue hole 20 from the travelling carriage 1 and control a gas supply or the like to the coke oven 30, based on the temperature measurement result. The device managing the operating conditions of the coke oven 30 may differentiate control of the coke oven 30 when the temperature is in the normal range from control of the coke oven 30 when the temperature is outside the normal range.

The device managing the operating conditions of the coke oven 30 may execute the coke oven 30 operation method. The coke oven 30 operation method may include a process of acquiring a temperature measurement result from the travelling carriage 1. The coke oven 30 operation method may include a process of managing the operating conditions of the coke oven 30 based on a temperature measurement result. The coke oven 30 operation method may include a process of determining whether a temperature is in a normal range. The coke oven 30 operation method may include a process of differentiating control of the coke oven 30 when the temperature is in the normal range from control of the coke oven 30 when the temperature is outside the normal range.

By managing the operating conditions of the coke oven 30 using the temperature measurement result from the travelling carriage 1, the operating conditions of the coke oven 30 can be easily managed without using human intervention.

### (Other embodiments)

As another embodiment, the image acquisition device 2 may be configured to include a thermoviewer. The arithmetic device 3 may detect the flue hole 20 by binarizing a thermoviewer image, making use of the temperature of the flue hole 20 being higher than the temperature of the travel surface surrounding the flue hole 20. When the image acquisition device 2 is configured to include a thermoviewer, the arithmetic device 3 may adopt the temperature of the flue hole 20 obtained by the thermoviewer as the temperature measurement result inside the flue hole 20.

According to an embodiment described above, the temperature measuring device 4 measures the temperature inside the flue hole 20, using the flue hole 20 as the measurement subject. The measurement subject of the temperature measuring device 4 is not limited to the flue hole 20, and may be any hole present on the travel surface of the travelling carriage 1. The temperature measuring device 4 may measure the temperature inside a hole present on the travel surface of the travelling carriage 1.

### EXAMPLE

An Example is described below.

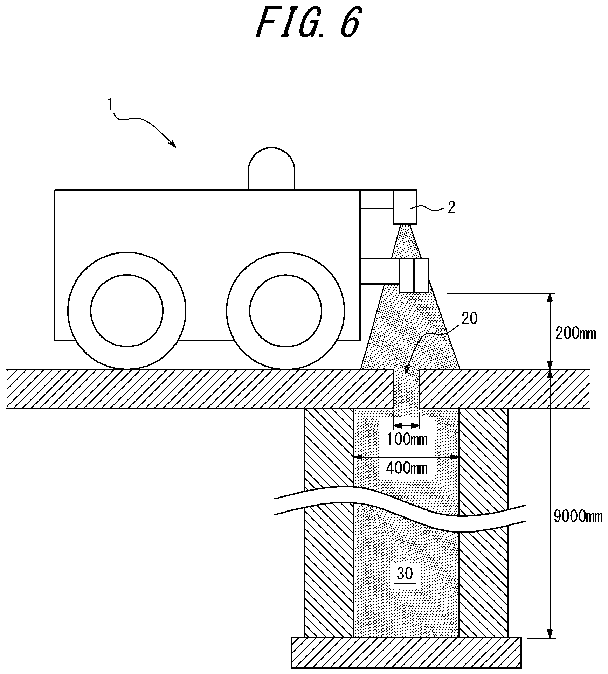

To demonstrate the effects of the travelling carriage 1 according to the present disclosure, a temperature measurement test of the combustion chamber bottom of the coke oven 30, that is, the oven bottom 31, was carried out by the travelling carriage 1 illustrated in FIG. 1, as illustrated in FIG. 6 as an Example. As in FIG. 6, the temperature measuring device 4 and the distance measuring device 6 were installed at a height of 200 mm from the travel surface of the travelling carriage 1. The aperture diameter of the flue hole 20 was 100 mm. The width of the coke oven 30 was 400 mm. The depth from the travel surface to the oven bottom 31 of the coke oven 30 was 9000 mm. The travelling carriage 1 included a radiation thermometer as the temperature measuring device 4. The travelling carriage 1 included an encoder installed on a drive wheel as the movement amount detecting device 7. The travelling carriage 1 included a LiDAR sensor as the range measuring device 8. The travelling carriage 1 was an autonomous travel carriage that travelled autonomously based on position information calculated using a SLAM algorithm.

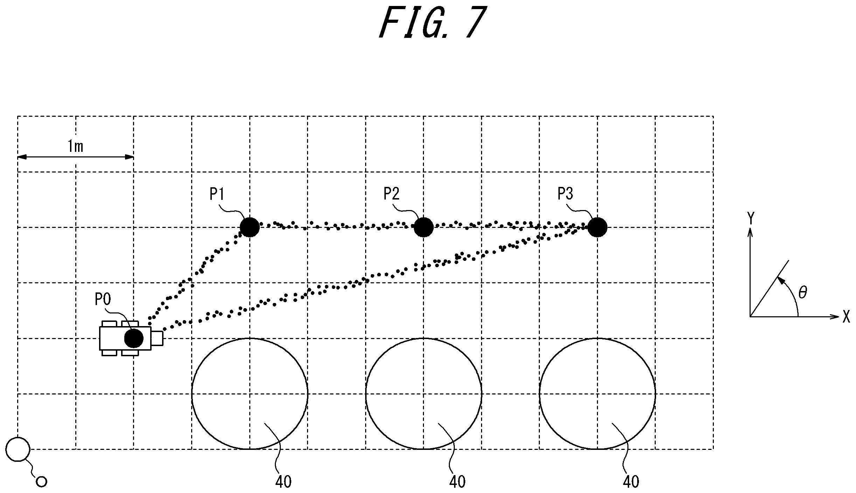

As illustrated in FIG. 7, the travelling carriage 1 travelled along a path set in the travel region. In the present Example, a first measurement position P1, a second measurement position P2, and a third measurement position P3 were set in the travel region. Each measurement position in the travel region was identified by an xy coordinate system with the origin O (0, 0) as a reference position. Further, the facing of the travelling carriage 1 at each measurement position was specified as an orientation angle θ. Parameters specifying each measurement location are expressed in the form (x, y, θ).

The initial position P0 of the travelling carriage 1 was specified as (1.0, 1.0, 0°). The first measurement position P1 was specified as (2.0, 2.0, 90°). The second measurement position P2 was specified as (3.5, 2.0, 90°). The third measurement position P3 was specified as (5.0, 2.0, 90°). The travelling carriage 1 travelled from the initial position P0 back to the initial position \P0 via the first measurement position P1, the second measurement position P2, and the third measurement position P3, in this order. The travelling carriage 1 carried out temperature measurement at each measurement position. The path of the travelling carriage 1 was set to avoid the obstacles 40 that exist in the travel region.

The actual x coordinate, y coordinate, and orientation angle θ when the travelling carriage 1 stopped at each measurement position are listed in Table 1.

### [Table 1]

**[Table 1]**

| | x[m] | y[m] | θ[deg] |
|---|---|---|---|
| P1 | 1.98 | 2.02 | 90.3 |
| P2 | 3.48 | 1.99 | 89.2 |
| P3 | 5.01 | 1.98 | 92.2 |

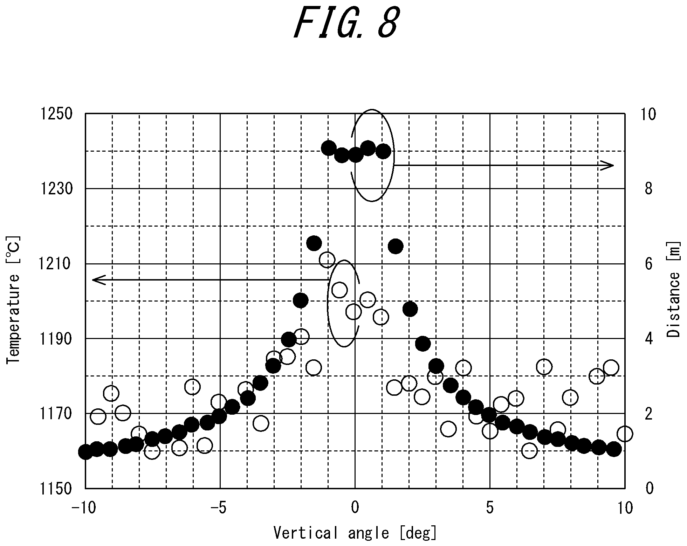

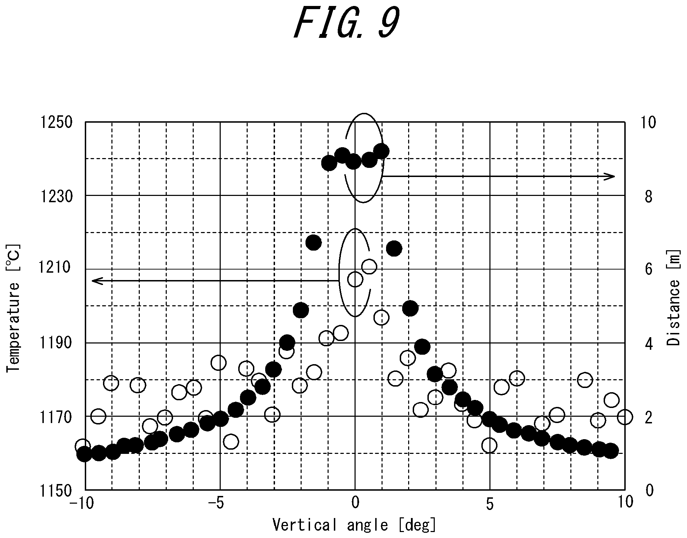

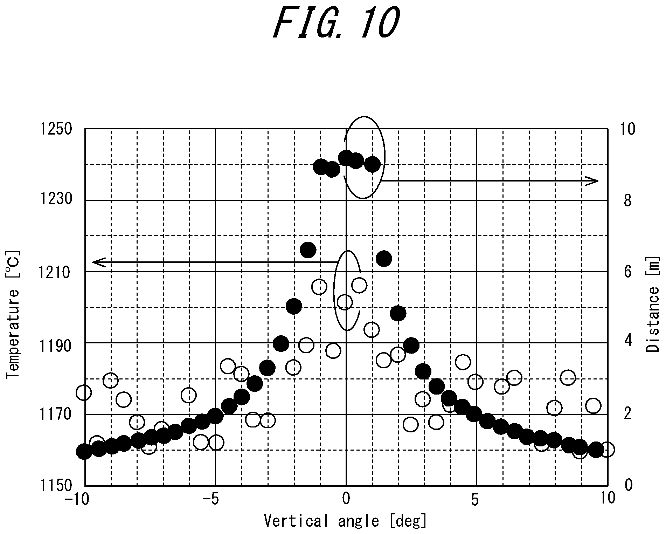

The arithmetic device 3 measured the temperature and the distance to the temperature measurement point while changing the vertical angle of the radiation thermometer from -10° to 10° at a pitch of 0.5° at each measurement position. The measurement results of distance and temperature at each measurement position are listed in Table 2. A graph of the measurement results of distance and temperature at the first measurement position P1 is illustrated in FIG. 8. A graph of the measurement results of distance and temperature at the second measurement position P2 is illustrated in FIG. 9. A graph of the measurement results of distance and temperature at the third measurement position P3 is illustrated in FIG. 10.

### [Table 2]

**[Table 2]**

| Angle [deg] | Distance [m] | | | Temperature [°C] | | |
|---|---|---|---|---|---|---|
| | P1 | P2 | P3 | P1 | P2 | P3 |
| -10.0 | 0.978 | 1.001 | 0.971 | 1158.8 | 1161.4 | 1176.1 |
| -9.5 | 1.040 | 1.028 | 1.015 | 1169.0 | 1169.8 | 1161.7 |
| -9.0 | 1.092 | 1.073 | 1.097 | 1175.3 | 1178.8 | 1179.2 |
| -8.5 | 1.155 | 1.133 | 1.167 | 1169.8 | 1162.2 | 1174.1 |
| -8.0 | 1.210 | 1.223 | 1.248 | 1164.4 | 1178.3 | 1167.7 |
| -7.5 | 1.331 | 1.290 | 1.318 | 1159.9 | 1167.1 | 1161.0 |
| -7.0 | 1.399 | 1.407 | 1.391 | 1172.0 | 1169.5 | 1165.5 |
| -6.5 | 1.517 | 1.482 | 1.481 | 1160.9 | 1176.5 | 1165.6 |
| -6.0 | 1.663 | 1.621 | 1.661 | 1177.0 | 1177.5 | 1175.1 |
| -5.5 | 1.773 | 1.769 | 1.798 | 1161.3 | 1169.0 | 1162.0 |
| -5.0 | 1.980 | 1.920 | 1.952 | 1173.2 | 1184.0 | 1162.0 |
| -4.5 | 2.190 | 2.164 | 2.215 | 1171.7 | 1163.1 | 1183.2 |
| -4.0 | 2.411 | 2.486 | 2.447 | 1176.6 | 1182.8 | 1180.8 |
| -3.5 | 2.786 | 2.806 | 2.843 | 1167.3 | 1179.8 | 1168.3 |
| -3.0 | 3.291 | 3.260 | 3.279 | 1184.1 | 1170.0 | 1168.4 |
| -2.5 | 3.981 | 3.983 | 3.957 | 1185.1 | 1187.5 | 1189.8 |
| -2.0 | 4.998 | 4.860 | 5.017 | 1190.9 | 1177.8 | 1183.0 |
| -1.5 | 6.541 | 6.707 | 6.569 | 1182.0 | 1181.8 | 1189.0 |
| -1.0 | 9.054 | 8.902 | 8.905 | 1210.8 | 1191.2 | 1205.5 |
| -0.5 | 8.879 | 9.080 | 8.848 | 1202.6 | 1192.2 | 1187.6 |
| 0.0 | 8.892 | 8.892 | 9.143 | 1196.8 | 1207.1 | 1201.6 |
| 0.5 | 9.059 | 8.961 | 9.054 | 1200.3 | 1210.6 | 1206.1 |
| 1.0 | 8.989 | 9.156 | 8.989 | 1195.5 | 1196.4 | 1193.5 |
| 1.5 | 6.436 | 6.478 | 6.312 | 1177.1 | 1180.2 | 1185.0 |
| 2.0 | 4.724 | 4.866 | 4.820 | 1177.9 | 1185.6 | 1186.4 |
| 2.5 | 3.821 | 3.879 | 3.892 | 1174.1 | 1171.5 | 1167.2 |
| 3.0 | 3.238 | 3.161 | 3.212 | 1180.1 | 1175.3 | 1174..2 |
| 3.5 | 2.741 | 2.776 | 2.784 | 1165.8 | 1182.5 | 1167.9 |
| 4.0 | 2.411 | 2.399 | 2.425 | 1182.2 | 1172.8 | 1172.8 |
| 4.5 | 2.130 | 2.196 | 2.190 | 1168.9 | 1168.3 | 1184.4 |
| 5.0 | 1.973 | 1.915 | 1.953 | 1165.1 | 1161.9 | 1179.0 |
| 5.5 | 1.734 | 1.746 | 1.743 | 1172.6 | 1178.0 | 1167.8 |
| 6.0 | 1.647 | 1.601 | 1.643 | 1173.8 | 1180.2 | 1177.4 |
| 6.5 | 1.507 | 1.515 | 1.514 | 1160.1 | 1165.4 | 1180.0 |
| 7.0 | 1.370 | 1.369 | 1.364 | 1182.3 | 1168.0 | 1162.8 |
| 7.5 | 1.315 | 1.309 | 1.296 | 1165.8 | 1170.2 | 1161.6 |
| 8.0 | 1.230 | 1.215 | 1.240 | 1174.1 | 1161.8 | 1171.4 |
| 8.5 | 1.152 | 1.142 | 1.137 | 1161.2 | 1180.0 | 1180.1 |
| 9.0 | 1.080 | 1.075 | 1.065 | 1179.8 | 1169.1 | 1159.1 |
| 9.5 | 1.042 | 1.038 | 1.013 | 1182.1 | 1174.3 | 1172.6 |
| 10.0 | 0.972 | 0.995 | 0.988 | 1164.7 | 1169.7 | 1159.9 |

Here, when the distance threshold (Dth) was set at 8.8 m, the measurement results indicate that the distance measurement results were greater than the distance threshold in a range from -1.0° to 1.0° relative to the vertical angle. Accordingly, it can be seen that the temperature of the oven bottom 31 can be measured by data in this range. The data comparison of the average value of the temperature measurement data in this range calculated as the temperature measurement result of the present Example with a value of a manual measurement result is listed in Table 3.

### [Table 3]

**[Table 3]**

| | Present example [°C] | Manual measurement [°C] |
|---|---|---|
| P1 | 1201.2 | 1203.1 |
| P2 | 1199.5 | 1198.3 |
| P3 | 1199.9 | 1201.1 |

It can be seen that the temperature measurement results of the present Example are in good agreement with the manual measurement results. Accordingly, it can be seen that the temperature of the oven bottom 31 can be measured without problems by the travelling carriage 1 according to the present disclosure.

Although embodiments of the present disclosure have been described based on the drawings and Example, it should be noted that a person skilled in the art may make variations and modifications based on the present disclosure. Therefore, it should be noted that such variations and modifications are included within the scope of the present disclosure. For example, functions and the like included in each component and step may be rearranged, and multiple components and steps may be combined into one or divided, as long as no logical inconsistency results. An embodiment according to the present disclosure may be realized as a program executed by a processor provided to a device or as a storage medium on which the program is stored. The scope of the present disclosure should be understood to include these examples.

### REFERENCE SIGNS LIST

1 travelling carriage (2: image acquisition device, 3: arithmetic device, 7: movement amount detecting device, 8: range measuring device, 9: storage device, 10: drive device, 11: measuring device (4: temperature measuring device, 5: actuator, 6: distance measuring device))
20 flue hole (22: side surface)
30 coke oven (31: oven bottom, 32: oven side, 33 to 36: points)
40 obstacle

## Claims

1. A travelling carriage configured to travel on a travel surface in a travel region by means of a drive device, the travelling carriage comprising:
a temperature measuring device configured to measure the temperature of a measurement subject;
an image acquisition device configured to acquire image information on the travel surface; and
an arithmetic device configured to detect the measurement subject from the image information, wherein
the arithmetic device is configured to adjust a position or an orientation of the temperature measuring device based on a position of the measurement subject detected from the image information.

2. The travelling carriage according to claim 1, wherein the arithmetic device is configured to detect the measurement subject from the image information by image recognition.

3. The travelling carriage according to claim 1 or 2, further comprising an actuator configured to adjust at least one of a position or an angle of the temperature measuring device.

4. The travelling carriage according to claim 3, wherein the arithmetic device is configured to adjust a horizontal position or a vertical angle of the temperature measuring device by means of the actuator before measuring of the temperature by the temperature measuring device.

5. The travelling carriage according to claim 4, further comprising
a distance measuring device configured to measure distance between the temperature measuring device and the measurement subject, wherein
the arithmetic device is configured to
change the vertical angle of the temperature measuring device by means of the actuator while the temperature is being measured by the temperature measuring device, and
filter temperature measurement results measured by the temperature measuring device using measurement results of the distance measuring device.

6. The travelling carriage according to any one of claims 1 to 5, wherein the arithmetic device is configured to determine whether a measurement result of the temperature measuring device is in a normal range and to report a determination result.

7. The travelling carriage according to any one of claims 1 to 6, further comprising:
a movement amount detecting device configured to detect a movement amount of the travelling carriage by acquiring an operation amount of the drive device;
a range measuring device configured to acquire obstacle information around the travelling carriage; and
a storage device configured to stores obstacle position information on the travel region, wherein
the arithmetic device is configured to calculate a position of the travelling carriage by inputting a detection result of the movement amount of the travelling carriage, the obstacle information, and the obstacle position information into a particle filter based on a SLAM algorithm, and to cause the travelling carriage to travel autonomously.

8. The travelling carriage according to claim 7, wherein the storage device is configured to store waypoint information that specifies at least one position of the measurement subject as a waypoint, and
the arithmetic device is configured to cause the travelling carriage to travel via the waypoint based on the waypoint information and to measure the temperature of the measurement subject at the waypoint by means of the temperature measuring device.

9. The travelling carriage according to any one of claims 1 to 8, wherein
the measurement subject is a hole in the travel surface, and
the temperature measuring device is configured to measure the temperature in the hole.

10. The travelling carriage according to claim 9, wherein
the hole is a flue hole formed at the top of a coke oven, and
the temperature measuring device is configured to measure the temperature in the coke oven via the flue hole.

11. A temperature measurement method comprising:
a travel process of causing the travelling carriage according to any one of claims 1 to 10 to travel in a travel region where a measurement subject exists;
an image acquisition process of acquiring image information on a travel surface by the image acquisition device installed on the travelling carriage;
a measurement subject detection process of detecting the measurement subject from the image information;
an adjustment process of adjusting a position or an orientation of the temperature measuring device based on a position of the measurement subject; and
a measurement process of measuring temperature of the measurement subject by means of the temperature measuring device.

12. A coke oven operation method comprising:
a process of acquiring oven temperature of a coke oven measured using the travelling carriage described according to claim 10; and
a process of managing operating conditions of the coke oven based on the oven temperature of the coke oven.
